Europäisches Patentamt

European Patent Office

Office européen des brevets

(19)

(11) **EP 0 985 904 A2**

(12) **EUROPEAN PATENT APPLICATION**

(43) Date of publication:
**15.03.2000 Bulletin 2000/11**

(51) Int Cl.⁷: $G01B\ 11/24$, $B61K\ 9/12$

(21) Application number: **99500143.5**

(22) Date of filing: **10.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.08.1998 ES 9801744**

(71) Applicant: **PATENTES TALGO, S.A.**
**28014 Madrid (ES)**

(72) Inventors:
• **Lopez Gomez, José Luis**
**28014 Madrid (ES)**
• **Gomez Gomez, Carlos Xavier**
**28014 Madrid (ES)**
• **Sanchez Revuelta, Angel Luis**
**28014 Madrid (ES)**

(74) Representative: **Elzaburu Marquez, Alberto et al**
**Elzaburu S.A.,**
**Miguel Angel, 21**
**28010 Madrid (ES)**

(54) **Measuring the unroundness and diameter of railway wheels**

(57)  Installation and process for measuring the unroundness and diameter of railway wheels using a rolling rail (2) along which the railway wheel (1) to be measured passes, and a guard-rail (8) to center said wheel during the measurement process. Several compact light sources (3) project compact light beams (9) over the wheel (1), such that they continuously interfere with the wheel flange and rolling band, the images produced by said compact light beams being projected over an opaque filter (4). A video camera (5) captures the images projected over the opaque filter (4) and sends them to a computer (6), where said images are filed to process them later on. The measurement process is initiated by a trigger system (7) which detects the presence of a wheel (1) and activates or deactivates the measuring equipment. The invention is applicable to the repair and maintenance of railway wheels.

Fig.1

## Description

### FIELD OF THE INVENTION

The present invention refers to the measurement of the unroundness out of true of wheels as the difference between the maximum and minimum height of the flange, being based on the fact that the flange circumference does not go out of unroundness, such that when the rolling band does so, variations in flange height are produced along the wheel development. In this measurement, artificial vision is used.

The mean flange height is taken as the mean and true height value.

If the diameter value of the last rolling band lathing is taken, twice the flange height of the last lathing is added and twice the height obtained as a mean value of this equipment is subtracted, the current diameter of the rolling band is obtained.

With a suitable computerized support it is possible to determine the "rolling diameter ovalization and mean diameter value" parameters.

### BACKGROUND OF THE INVENTION

The prior art to measure the unroundness and diameter of railway wheels is based on mechanical contacts, a background of measurement by artificial vision being unknown. Nevertheless, artificial vision has been used to measure different rolling parameters in railway vehicle wheels, being possible to mention document EP-A-0 751 371 of the present applicant as an example.

### SUMMARY OF THE INVENTION

For a train moving on a track at a speed comprised between 5 and 10 km/h, the invention basically consists in the projection of several beams of compact light, for example, four, over the wheel to be measured, such that the former continuously interfere with the flange and the rolling band of the wheel. The compact light sources may consist of cylindrical lasers.

The images generated by the compact light beams are captured through an opaque filter by a video camera, which files the images obtained at a rate of 50 to 76 images per second. These images are sent to a computer, where they are filed for later processing.

The length of the measurement installation will be equal or less than the bogie wheelbase which has been provided with a minimum value of 1.8 m. Preferably, the installation length will be 200 mm shorter than the bogie wheelbase.

Under these conditions, the complete development of the wheel will not be checked, such that it will be necessary to double or triple the basic installation until managing to measure the entire wheel development.

### BRIEF DESCRIPTION OF THE DRAWINGS

The invention is described in greater detail below, referring to the attached drawings, in which:

- Figure 1 shows the arrangement as a whole of the installation of the invention and,
- Figure 2 shows the wheel rolling per rail, the interference with the light beams and the parameters to be measured.

### DETAILED DESCRIPTION OF THE INVENTION

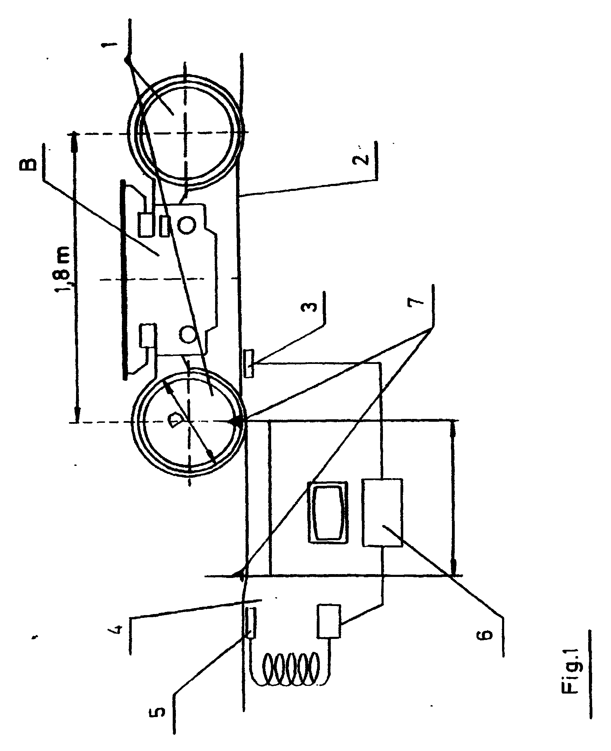

Firstly referring to Figure 1, a bogie B is observed with wheels 1 to be measured which circulate along a rolling zone 2. Compact light sources 3 project compact light beams which interfere with the rolling during the distance L. This distance is selected as equal or less than 1.8 m, or may be calculated in accordance with the equation $L = D/2 * \pi$, wherein D is the wheel diameter shown in Figure 1.

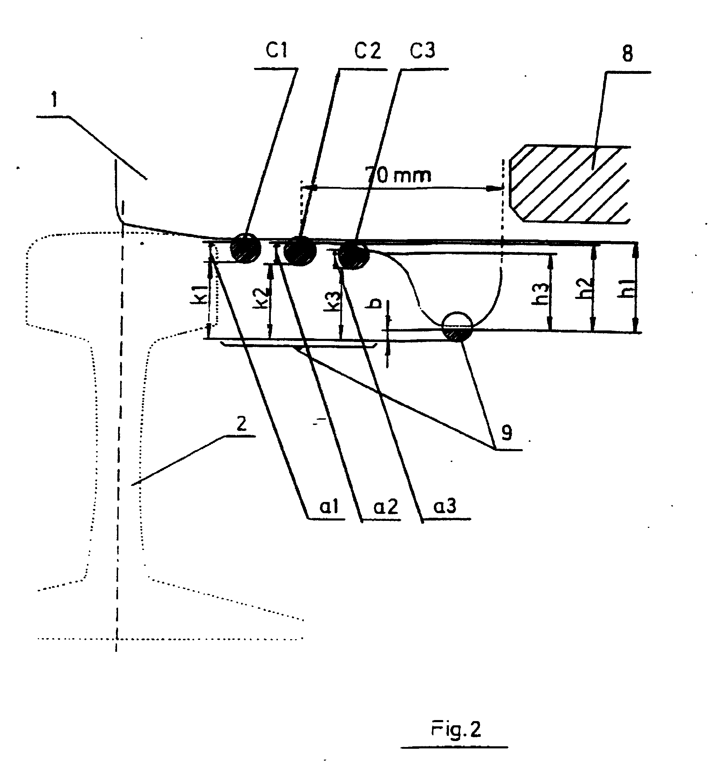

An opaque filter 4 permits images to be obtained like those shown in Figure 2, and a camera objective 5 captures on a video the images projected over the opaque filter 4, at a rate of 50 to 76 images/second.

The images captured by the video camera 5 are sent to a computer 6, where they are filed for later processing.

The installation shown in Figure 1 is completed with a trigger system 7, which detects the presence of a wheel 1 and activates or deactivates the measuring equipment.

Referring now to Figure 2, a rail is observed in the rolling zone 2, a wheel 1 to be measured leans on said rail and a guard-rail 8 keeps the wheel centered during the measuring process.

Likewise, observed in Figure 2 are the interference images of the wheel with the compact light beams 9, captured by the video camera 5. These interference images are filed in the computer 6 indicated in Figure 1, and later the measurements $K_1$, $K_2$, $K_3$ and b are obtained, as well as $a_1$, $a_2$, $a_3$, hence obtaining the height measurements $h_1$, $h_2$ and $h_3$, at several points of the wheel development. All the measurements are illustrated in Figure 2.

Between 50 and 76 value trios will be obtained for the entire wheel development.

Comparing values $h_{1i}$, $h_{2i}$ and $h_{3i}$, the ovalization of the three rolling circles $c_1$, $c_2$ and $c_3$ will be obtained as the difference between $h_{imax}$ and $h_{imin}$.

As resulting from Figure 2, the following equations are satisfied:

$$h_1 = K_1 + a_1 - b$$

$$h_2 = K_2 + a_2 - b$$

$$h_3 = K_3 + a_3 - b$$

The mean of the $h_2$ values is the mean value of the height and is expressed by the following ratio:

$$hm = \frac{\Sigma h_{2i}}{h_i}$$

Likewise the equation below is satisfied:

$$D_{ma} = D_m + 2h - 2h_m$$

wherein $D_m$ is the diameter measured in the last machining, h is the flange height measured in the last machining, $D_{ma}$ is the current wheel diameter and $h_m$ is the current wheel flange height.

By using the installation of the invention, it will be possible to measure rolling heights throughout the development of a wheel by means of artificial vision, as well as obtaining the rolling circle ovalization as the difference between $h_{max}$ and $h_{min}$ of the different circles along the development of the wheel.

Likewise, with the installation of the invention the rolling diameter may be obtained starting from that obtained in the last machining and considering the mean height of the rolling circle which is located at 70 mm from the inside face of the wheel.

Although the above gathers the essential features of the present invention, it will be understood that the latter may be varied or modified by the experts in the art. For this reason, the scope of the invention is only limited by the contents of the attached claims.

## Claims

1. An installation for measuring the unroundness and diameter of railway wheels using artificial vision, characterized in that it comprises for each side of a railway line: a rolling rail (2) over which the railway wheel (1) passes, to be measured at a speed of 5 to 10 km/h; a guard-rail (8) to center said wheel (1) during the measurement process; several compact light sources (3) to project compact light beams (9) over the wheel (1), such that they continuously interfere with the flange and rolling band of the wheel; an opaque filter (4) over which the images produced by said compact light beam (9) are projected; a video camera (5) to capture the images projected over the opaque filter (4); a computer (6) connected to the video camera (5) and destined to file the images captured by the latter and process them later on; and a trigger system (7) to detect the presence of a wheel (1) and to activate or deactivate the measuring equipment.

2. An installation according to claim 1, characterized in that the video camera (5) is designed to obtain and store between 50 and 76 images per second.

3. An installation according to claims 1 and 2, characterized in that the measurement length (L) is equal or less than that of the bogie wheelbase, preferably 200 mm less than said wheelbase.

4. An installation according to claims 1 to 3, characterized in that it comprises four compact light sources (3).

5. An installation according to claims 1 to 4, characterized in that said compact light sources (3) are cylindrical lasers.

6. A process for measuring the unroundness and diameter of railway wheels in which the installation of claims 1 to 5 is used, characterized in that the measurement equipment is activated with the trigger system (7); several compact light beams (9) are projected, preferably four beams, from the compact light sources (3) over the wheel (1) to be measured, such that said beams continuouly interfere with the wheel flange and rolling band; the images generated by the compact light beams (9) are projected over the opaque filter (4); the images projected over the opaque filter (4) are captured with the video camera (5), filing the images in said camera; and the video camera (5) images are fed to a computer (6), where they are filed for later processing.

Fig.1

Fig. 2